# EUROPÄISCHE PATENTSCHRIFT

(11) **EP 1 283 632 B1**
(45) Veröffentlichungstag und Bekanntmachung des Hinweises auf die Patenterteilung: **05.12.2007**
(21) Anmeldenummer: 02405687.1
(22) Anmeldetag: 12.08.2002
(51) Int. Cl.: H04L 29/06

(54) **Verfahren und Anordnung zur Übertragung von Daten**
Method and arrangement for the transfer of data
Méthode et dispositif pour le transfert des données

(30) Priorität: 10.08.2001 CH 14812001
(43) Veröffentlichungstag der Anmeldung: 12.02.2003
(73) Patentinhaber: iniNet Solutions GmbH, 4153 Reinach (CH)
(72) Erfinder: Bruegger, Peter, 4132 Muttzenz (CH); Baumgartner, Matthias, CH-4105 Biel-Benken (CH); Jambois, Fabien, FR-68170 Rixheim (FR); Adam, Jean-Marc, FR-68440 Eschentzwiler (FR)
(74) Vertreter: Eder, Carl E.

(56) Entgegenhaltungen:
- EP-A- 1 058 422
- WO-A-00/76130
- WO-A-01/31852
- WO-A-01/40912
- WO-A-98/53581
- WO-A-99/46746
- GB-A- 2 325 548
- US-A- 5 754 830

## Beschreibung

Die vorliegende Erfindung hat ein Verfahren sowie eine Anordnung zur Übertragung von Daten, insbesondere von Daten zum Bedienen, Beobachten und Steuern eines externen Systems zum Gegenstand, nämlich ein Verfahren gemäss dem Oberbegriff des Patentanspruchs 1 und eine Anordnung gemäss dem Oberbegriff des Patentanspruchs 6.

Mit Hilfe des WWW (World Wide Web), welches auch als Internet bezeichnet wird, ist es möglich, von jedem beliebigen Rechner aus, der Zugang zum Internet hat, eine Datenverbindung zu einem sogenannten Webserver (WS) oder Internet-Informationsserver (IIS) aufzubauen. Der Zugriff auf einen WS oder IIS erfolgt mit Hilfe eines bekannten Internet-Browser, zum Beispiel mit dem Internet-Explorer der Firma Microsoft oder mit dem Internet-Browser der Firma Netscape. Beim Aufbau einer Datenverbindung von einem sogenannten Web-Client aus wird ein Request an einen Internet-Server durch Eingabe und Abschicken einer URL-Adresse abgegeben. Beim Zustandekommen der Datenverbindung antwortet der angerufene Internet-Server mit einer HTML-Seite (HTML = Hyper Text Markup Language) Die WWW-Clients wie beispielsweise Netscape oder Internet-Explorer kommunizieren hierbei mit dem WWW-Server über das Hypertext Transport Protocol (HTTP). Jeder Datenverbindung liegt somit ein Requestprotokoll und als Reaktion darauf ein sogenanntes Response-Protokoll zugrunde.

Bedingt durch die beschränkten Übertragungskapazitäten im Internet und dem Wunsch nach schnellen Ladezeiten sind die Datenstrukturen im World Wide Web effizient aufgebaut. Der Umfang einer üblichen HTML-Seite liegt im Bereich weniger kbyte, Bilddateien werden mit leistungsfähigen Algorithmen komprimiert und ausführbare Programme, wie z. B. Java-Applets, werden interpretativ im Browser abgearbeitet. All dies entlastet die Quelle der Daten in bezug auf Speicherkapazität und CPU-Leistung. Dazu kommt, dass mit Hilfe der Webtechnologie und mittels bekannten Softwareapplikationen verhältnismässig einfach B&B-Oberflächen (Bedienen & Beobachten) erstellt werden können. Die Bedienung der B&B-Oberfläche erfolgt dabei mit den bekannten Standard-Browsern, deren Handhabung intuitiv ausgelegt und allgemein bekannt ist.

Diese Eigenschaften schaffen die Voraussetzungen für die bereits heute breit eingesetzte Anwendung der Webserver-Technologie zur Überwachung, Steuerung und Fernwartung von industriellen Systemen und Prozessen.

So ist bekannt, mittels eines Internet-Browsers von einem Web-client aus einen Fernzugriff auf den entfernten Webserver des zu steuernden bzw. zu überwachenden Systems aufzubauen. Hierbei kann der Zugriff auf den Webserver des Systems zum Beispiel direkt über eine Punkt-zu-Punkt-Verbindung erfolgen oder aber über das Telefonnetz via Modem und es kann der Webserver entweder über einen Hosting-Provider direkt auf dem Internet sichtbar sein oder er wird innerhalb eines Intranets oder WANs verwendet.

Die Vorteile dieser Anwendung der Webserver-Technologie zur Fernwartung von Systemen via Internet liegen auf der Hand. So lassen sich B&B-Oberflächen mit zum Beispiel bekannten Microsoft-Werkzeugen, wie Word, Excel, PowerPoint usw., verhältnismässig einfach erstellen und mit den Standard-Browsern Microsoft Internet Explorer und Netscape-Communicator benutzerfreundlich bedienen.

Aus WO-99/46746 ist ein System zur Fernabfrage von Messgeräten via Local Area und Wide Area Networks via ein zwischen LAN und WAN geschaltetes Gateway bekannt. Die Architektur dieses Systems baut auf einer Dauerverbindung zwischen einem Gateway und den Messgeräten auf.

Aus GB-2325548 ist der allgemeine Fall einer Kombination eines sog. embedded Webservers und eines Portals bekannt. Die Verbindung des Portals mit dem Webserver erfolgt über eine reguläre Telefonieverbindung. Dies trägt den möglichen Problemen mit Firewalls und temporären Internetadressen nicht Rechnung.

Aus der WO 00/45563 ist ein System und ein Verfahren zum Bedienen und Beobachten eines Automatisierungssystems bekannt, bei dem das Intranet des Automatisierungssystems einen Webserver enthält, der somit innerbalb der das Intranet schützenden Firewall angeordnet ist.

Bei im Internet sichtbaren Webservern weist diese bekannte Anwendung der Webserver-Technologie jedoch den Nachteil auf, dass das zu steuernden bzw. zu überwachende System zumeist aus Kosten- oder Sicherheitsgründen nicht über einen permanenten und transparenten Internetzugang verfügt. Dazu kommt, dass obwohl der Zugang auf das Internet heute von jedem Arbeitsplatz aus möglich ist, indem mittels Modem oder Standleitung über einen Internet Service Provider (ISP) eine Verbindung für einen Webbrowser aufgemacht wird, die so hergestellte Verbindung meist nur sehr eingeschränkt bidirektional nutzbar ist. So benutzen Firmennetzwerke in der Regel eine nicht Internet-kompatible Adressierung. Der Zugang auf das Internet geschieht in diesen Fällen über speziell konfigurierte Proxy-Server, Router, Switches und Firewalls. Dazu kommt, dass Internet Service Provider (ISP) eigene IP Adressen besitzen und ihren Kunden eine dieser Adressen bei jedem Zugriff dynamisch zuweisen. Firewalls und Proxy-Server können zwar in bestimmten Netzwerken so konfiguriert sein, dass ein bidirektionaler Datenaustausch möglich wird. Eine solche Konfiguration ist aber verhältnismässig kompliziert und scheitert in der Praxis immer wieder an der realen Machbarkeit.

Der Erfindung liegt nun die Aufgabe zugrunde, ein Verfahren und eine Anordnung zur bidirektionalen Übertragung von Daten zwischen zwei koppelbaren Datenverarbeitungsvorrichtungen zu schaffen, so dass die eine Datenverarbeitungsvorrichtung durch die andere bedient, beobachtet und gesteuert werden kann, wobei insbesondere bei einer Datenübertragung über das Internet das Verfahren und die Anordnung die bidirektionale Datenübertragung auch durch Firewalls ermöglicht.

Diese Aufgabe wird erfindungsgemäss durch ein Verfahren mit den Merkmalen des Patentanspruchs 1 und eine Anordnung mit den Merkmalen des Patentanspruchs 5 gelöst.

Vorteilhafte Ausführungsformen der Erfindung sind Gegenstand der abhängigen Ansprüche.

Die Erfindung basiert im wesentlichen auf der Nutzung der in bekannten Datenverarbeitungssystemen üblicherweise vorhandenen Web-Software und zeichnet sich dadurch aus, dass die Verbindung der beiden Datenverarbeitungsvorrichtung in einem ersten Schritt von der zu steuernden bzw. zu überwachenden, nachfolgend auch als System bezeichneten Vorrichtung aus aufgebaut wird, und zwar so, dass letztere und/oder deren Server sich für einen ISP wie ein Client (Browser) verhält, so dass die bestehenden Netz- und Web-Konfigurationen der miteinander zu verbindenden Datenverarbeitungsvorrichtungen zur Lösung der erfindungsgemässen Aufgabe ohne aufwendige Anpassungen und Einstellungen eingesetzt werden können.

Die der Erfindung zugrunde liegende Aufgabe wird also auf überraschend einfache Weise dadurch gelöst, dass vom zu bedienenden bzw. zu beobachtenden System aus eine erste Verbindungsanforderung zum Aufbau eines ersten Übertragungskanals an einen vom System losgelösten zentralen Webserver gesandt wird, dass bei einer Verbindungsanforderung von einem Web-Client an den Webserver, beispielsweise von einem Bedien- und Beobachtungssystem, zwischen Client und Webserver ein weiterer Übertragungskanal erstellt wird und dass der Client über den als Tunnel zum bidirektionalen Senden und Empfangen von Nutzdaten dienenden ersten Übertragungskanal Kontakt mit dem System aufnimmt.

Das System, auf welches von einer entfernten Instanz zugegriffen werden soll, verfügt erfindungsgemäss über einen Browser oder eine browserartige Software, welche auf den zentralen Webserver mittels eines HTTP Kommandos zugreift, so dass dieser Zugriff nicht von einem herkömmlichen, Web-Browser initiierten Zugriff zu unterscheiden ist. Während im bekannten Fall ein File auf dem Webserver geöffnet und danach an den Anrufenden zurück transferiert wird, bleibt beim erfindungsgemässen Verfahren diese Anfrage offen, sie bleibt also entweder unbeantwortet oder die Dauer der Antwort wird zeitlich unendlich ausgedehnt, und es wird - wie bereits erwähnt - der Verbindungskanal als Tunnel verwendet, um Verbindungsanfragen von Clients, die über den gleichen Webserver ankommen, an das System weiterzuleiten.

Das erfindungsgemässe Verfahren stellt somit eine Datenverbindung zur Verfügung, über die der Client als B&B-System und das zu beobachtende bzw. zu steuernde System miteinander kommunizieren können. Zwischen Client und Server oder mit anderen Worten zwischen Bedien- und Beobachtungssystem und Automatisierungssystem wird funktional eine bidirektionale Datenverbindung sichergestellt, so dass eine Übertragung von Nutzdaten in beide Richtungen zwischen Client und Server ermöglicht wird. Eine derartige Datenverbindung ist besonders zum Bedienen und Beobachten eines Automatisierungssystems via Internet geeignet, wobei der Client als Bedien- und Beobachtungssystem fungieren kann, welches von jedem beliebigen mit dem Internet verbunden Rechner aus aktivierbar ist. Im Gegensatz zu konventionellen Internet-Datenverbindungen ergibt sich somit ein Datenübertragungsverfahren, das weder vom Client noch vom zu steuernden System die Notwendigkeit fordert, im Internet sichtbar zu sein oder einen Webserver (IIS = Internet Information Server) installiert zu haben. Dadurch wird es möglich, von jedem beliebigen Ort der Welt, vor und hinter Firewalls, sowohl vom Web-Client als auch vom Automatisierungssystem aus eine bidirektionale Datenverbindung zum Webserver aufzubauen. Da die Datenverbindung zwischen Webserver und Automatisierungssystem mittels eines Browsers oder einer browserartigen Software vom zu steuernden System aus erstellt wird, werden die eingangs erläuterten Nachteile bekannter Verfahren auf überraschend einfache Art und Weise behoben.

Ein Erhalt der Datenverbindung bzw. der Datenverbindungen kann allenfalls dadurch sichergestellt werden, dass beim Nichtvorhandensein von Nutzdaten Scheindaten übertragen werden. Weiter können zur Aufrechterhaltung einer permanenten Datenverbindung Informationen an den Webserver gesandt werden, die diesem mitteilen, dass noch eine Übertragung von Nutzdaten beabsichtigt ist.

Eine besonderes vorteilhafte Anwendung unter Nutzung vorhandener Internet-Infrastrukturen für eine bidirektionale Datenübertragung besteht darin, dass das Verfahren nicht nur zum Bedienen und Beobachten, sondern auch zum Fernwarten eines Automatisierungssystems vorgesehen ist.

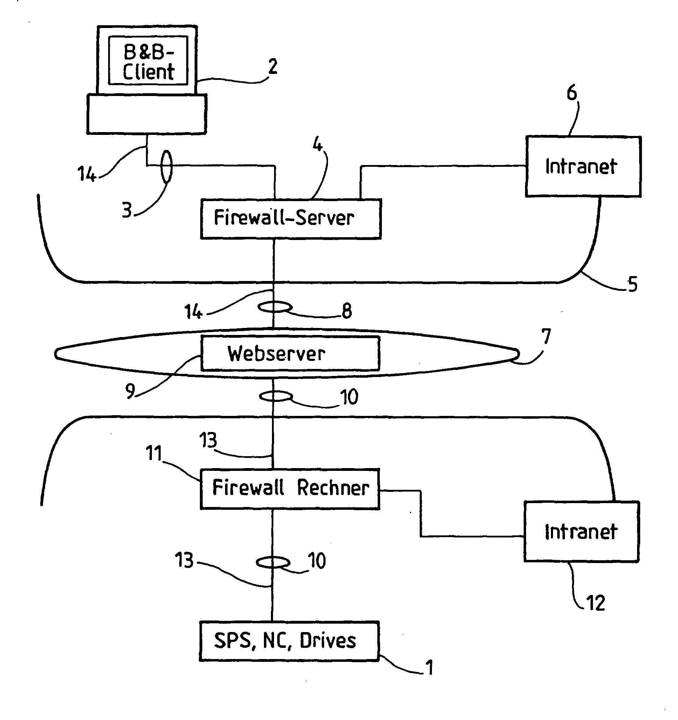

Im folgenden wird die Erfindung anhand von einem in der Zeichnung dargestellten Ausführungsbeispiel näher beschrieben. Die einzige Figur der Zeichnung zeigt dabei eine Anordnung zum Bedienen, Beobachten, Steuern und allenfalls Fernwarten eines Systems 1, welches beispielsweise speicherprogrammierbare Steuerungen (SPS), numerische Steuerungen (NC) und/oder Antriebe (Drives) aufweist. Die Anordnung weist ferner ein Bedien- und Beobachtungssystem 2 (B&B-Client) auf, welches über ein internes Datennetz 3, zum Beispiel Ethernet mit einem Firewall-Rechner 4 gekoppelt ist.

Dem Bedien- und Beobachtungssystem 2, welches im folgenden abgekürzt auch als B&B-System 2 bezeichnet wird, ist eine lokale Intranet-Adresse zugeordnet, die im Internet nicht bekannt sein muss. Mit Hilfe der Linie 5 ist der Firewall des Firewall-Rechners 4 angedeutet, der das interne Kommunikationsnetz 6 des Firewall-Servers 4 umgibt.

Mit dem Bezugszeichen 7 ist das weltweite Datenkommunikationsnetz Internet gekennzeichnet. Der Firewall-Rechner 4 ist über eine Verbindungsleitung 8, zum Beispiel via ISDN, mit dem Internet 7 koppelbar. Dem B&B-System 2 und Automatisierungssystem 1 ist ein zentraler Webserver 9 zugeordnet. Dieser ist im vorliegenden Fall ein Internet-Webserver und sowohl vom Client 2 als auch vom Automatisierungssystem 1 via Internet aufrufbar. Der Aufruf des Internet-Webservers 9 vom Automatisierungssystem 1 erfolgt über eine Verbindungsleitung 10 und einen dem System zugeordneten zweiten Firewall-Rechner 11. Der Firewall-Rechner 11 umgibt das dem Firewall-Rechner 11 zugeordnete Intranet 12.

Zum Verbindungsaufbau zwischen dem Client 2 und dem System 1 kommt das erfindungsgemässe, asymmetrische Verfahren zum Einsatz. Hierzu schickt das System 1 via Internet einen ersten Request an den Internet-Webserver 9, auf den dieser gegebenenfalls mit einer Antwort reagiert, die zur Vermeidung einer zeitlichen Unterbrechung unendlich lang ausgedehnt wird. Hierdurch wird ein erster Übertragungskanal, der sogenannte Tunnel, geschaffen, über den ein sich im Internet angemeldeter Web-Client jederzeit Daten an das System senden kann. Dieser erste Datenübertragungskanal ist in der Zeichnung mit dem Bezugszeichen 13 gekennzeichnet.

Der Aufbau eines zweiten Datenübertragungskanals 14 erfolgt dadurch, dass der Client 2 einen Request, d. h. eine Verbindungsanforderung an den Internet-Webserver 9 des Automatisierungssystems 1 sendet und so die bidirektionale Verbindung zwischen System 1 und Client 2 via Internet-Webserver 9 erstellt.

Der Internet-Webserver 9 dient erfindungsgemäss als Vermittler des Verbindungsaufbaus zwischen dem Web-Client 2 und dem Automatisierungssystem 1. Er kann nach erstellter Verbindung permanent als Verbindungsbrücke zwischen Client 2 und System 1 bestehen bleiben. Es ist aber auch möglich, dass nach dem Verbindungsaufbau eine vom Webserver getrennte Datenverbindung zwischen Web-Client 2 und System 1 erzeugt wird, so dass der Webserver 9 dann für die Beobachtung, Bedienung und allenfalls Fernwartung des Systems 1 nicht mehr benötigt wird und daher für das erfindungsgemässe Verfahren lediglich die Funktion eines temporären Webservers inne hat.

Der Internet-Webserver 9 kommuniziert mit dem Web-Client 2 und dem System 1 vorzugsweise über das im WWW weit verbreitete HTTP-Protokoll. Hierzu sei erwähnt, dass im Rahmen der Erfindung diese Kommunikation selbstverständlich auch über ein anderes, mit dem HTTP aber vergleichbares Protokoll möglich ist.

Insgesamt ergibt sich so eine Nutzdatenkommunikation über Internet in beide Richtungen, die von beiden Seiten aus induziert und zeitlich unabhängig ist. Damit wird es möglich, vorhandene Kommunikationswege des Internets auch im Bereich der Automatisierungs- und Fernwartungstechnik in gewohnter Weise mittels der Web-Browser-Technologie für Bedien- und Beobachtungszwecke zu nutzen.

In einer speziellen Ausführungsform der in der Zeichnung dargestellten Anordnung kann das Automatisierungssystem 1 noch zusätzlich einen in der Zeichnung nicht dargestellten lokalen Webserver betreiben, wobei dann der erfindungsgemässe "Tunnel-Service" als Vermittler des HTTP Protokolls zwischen dem Internet-Webserver 9 und dem Webserver des Systems 1 dient.

Eine Weiterentwicklung der vorstehend beschriebenen Anordnung besteht darin, dass der Internet-Webserver 9 mehrere verschiedene Systeme 1 gleichzeitig transparent abbildet, indem er jedem abgebildeten System 1 einen für den mindestens einen Client 2 sichtbaren, eindeutigen Pfad zuweist. Der Zugriff erscheint in diesem Fall für die Clients wie ein Zugriff auf ein Unterverzeichnis auf dem Internet-Webserver 9. Bei einer anderen Weiterentwicklung der erfindungsgemässen Anordnung ist eine Kaskadierung mehrerer Internet-Webserver 9 vorgesehen, um mehrere Barrieren in durch z.B. Gateways, Proxy-Servern, Routern oder Switches verbundenen Netzwerken transparent zu machen.

Bei einer anderen Ausführungsform der Erfindung ist die erfindungsgemässe Anordnung mit dem Webserver 9 sowie derselben Technologie und denselben Komponenten in einer Intranet- oder WAN-Umgebung ohne direkte Verwendung des Internets implementiert.

Bei einer wieder anderen Ausführungsform der Erfindung ist der als Vermittler dienende zentrale Webserver 9 auf dem Web-Client 2 oder in dessen Umgebung installiert.

Der Zugriff eines Web-Clients 2 auf das System 1 setzt erfindungsgemäss eine bestehende Browser- oder browserartige Verbindung zwischen dem Webserver 9 und dem System 1 voraus. Ist das System 1 nicht permanent mit dem Webserver 9 gekoppelt, muss diese Verbindung noch vor der Anmeldung des Clients am Webserver 9 aufgeschaltet werden. Dies kann auf verschiedene Arten erfolgen. So kann der Aufbau des Verbindungskanals 13 durch das Bedienungspersonal des Systems manuelle ausgeführt werden, oder das System 1 öffnet diesen Tunnel zum Webserver 3 gemäss einem im voraus festgelegten Programm periodisch und öffnet für eine bestimmte Dauer ein Zugriffsfenster für den mindestens einen Client. Eine andere Möglichkeit zur Indizierung des Verbindungsaufbaus besteht darin, dass der allenfalls im Internet sichtbare Webserver 9 beim Anmelden eines Clients 1 über einen anderen Kommunikationskanal eine Aufforderung an das System 1 weiterleitet, den Tunnel zu öffnen. Dieser Kanal kann dabei durch
- Senden einer Email oder eines SMS,
- Anruf an ein direkt am System 1 angeschlossenes Modem oder
- Signalisierung über eine zusätzliche Software realisiert werden.

## Patentansprüche

1. Verfahren zur Übertragung von Daten zum Bedienen und Beobachten eines in einem durch eine Firewall (11) geschützten ersten Intranet-eingebetteten Automatisierungssysterms (1) zwischen diesem Automatisierungssystem (1) und einem in einem zweiten, vom ersten Intranet unabhängigen Intranet eingebetteten Webclient (2), indem vom Webclient (2) eine erste Verbindungsanforderung zum Aufbau eines ersten Übertragungskanals an einen Webserver (9) gesandt wird, **dadurch gekennzeichnet, dass** vom zu bedienenden bzw. zu beobachtenden Automatisierungssystem (1) aus in Form einer zweiten Verbindungsanforderung mittels eines HTTP- Befehls zum Aufbau eines zweiten Übertragungskanals auf den Webserver (9) zugegriffen wird, dass dieser Webserver (9) sich ausserhalb des ersten Intranets befindet, in welches das Automatisierungssystem eingebettet ist, dass der durch die zweite Verbindungsanforderung aufgebaute zweite Übertragungskanal einen Datentransfer-Tunnel zwischen dem Automatisierungssystem (1) und dem Webserver (9) bildet, dass bei der ersten Verbindungsanforderung des Webclients (2), zwischen dem Webclient (2) und dem Webserver (9) mindestens ein erster Übertragungskanal erstellt wird derart, dass zwischen Webclient (2) und Automatisierungssystem (1) eine Verbindung zum bidirektionalen Senden und Empfangen von Nutzdaten unter dem HTTP-Protokoll entsteht.

2. Verfahren nach Anspruch 1, **dadurch gekennzeichnet, dass** sich der Webserver (9) im Worldwide Web befindet.

3. Verfahren nach Anspruch 1, **dadurch gekennzeichnet, dass** das zweite Intranet in welches der Webclient (2) eingebettet ist, durch eine Firewall (4) geschützt ist.

4. Verfahren nach einem der Ansprüche 1-3, **dadurch gekennzeichnet, dass** der Datentransfer-Tunnel zwischen dem Automatisierungssystem (1) und Webserver (9) vor der Anmeldung des Webclients (2) entweder durch ein im voraus festgelegtes Programm periodisch für eine bestimmte Zeitdauer oder manuell oder mittels einer separaten Aufforderung an das Automatisierungssystem (1) erstellt wird.

5. Anordnung zur Durchführung des Verfahrens gemäss einem der Ansprüche 1 bis 3, mit einem Automatisierungssystem (1), welches in einem durch eine Firewall (11) geschützten ersten Intranet eingebettet ist, einem zum Bedienen, Beobachten, Steuern und Fernwarten des Automatisierungssyatems (1) dienenden Webclient (2), der in einem vom ersten Intranet unabhängigen zweiten Intranet eingebettet ist und einem die Verbindung zwischen dem Automatisierungssystem (1), dem Webclient (2) vermittelnden Webserver (9) und Mitteln zum Aufbau einer Übertragungskanal vom Webclient (2) zum Webserver (9), **dadurch gekennzeichnet, dass** sich der Webserver (9) ausserhalb des ersten Intranets befindet, in welches das Automatisierungssystem (1) eingebettet ist und dass Mittel zum Aufbau eines Übertragungskanals vom Automatisierungssystem (1) zum Webserver (9) in Form eines Datentransfer Tunnels für das Übermitteln von Daten unter dem HTTP-Protokoll vorhanden sind.

6. Anordnung nach Anspruch 5, **dadurch gekennzeichnet, dass** das zweite Intranet, in welches der Webclient (2) eingebettet ist, durch eine Firewall (4) geschützt ist.

7. Anordnung nach Anspruch 5, **dadurch gekennzeichnet, dass** sich der Webserver (9) im Worldwide Web befindet.

8. Anordnung nach Anspruch 5, **dadurch gekennzeichnet, dass** sich der Webserver (9) im zweiten Intranet des Webclients (2) befindet.

9. Anordnung nach Anspruch 7, **gekennzeichnet durch** eine Kaskadierung mehrerer Webserver (9).

## Claims

1. Method for transmitting data for operating and observing an automation system (1) embedded in a first Intranet protected by a firewall (11) between this automation system (1) and a web client (2) embedded in a second Intranet independent of the first Intranet, by sending a first connection request from the web client (2) for establishing a first transmission channel to a web server (9), **characterized in that** the web server (9) is accessed from the automation system (1) to be operated and/or to be observed in the form of a second connection request by means of an HTTP command for establishing a second transmission channel, **in that** this web server (9) is present outside the first Intranet in which the automation system is embedded, **in that** the second transmission channel established by the second connection request forms a data transfer tunnel between the automation system (1) and the web server (9), **in that** at least one first transmission channel is created between the web client (2) and the web server (9) at the first connection request of the web client (2) so that a connection for bidirectional transmission and reception of useful data under the HTTP protocol results between web client (2) and automation system (1).

2. Method according to Claim 1, **characterized in that** the web server (9) is present in the World Wide Web.

3. Method according to Claim 1, **characterized in that** the second Intranet in which the web client (2) is embedded is protected by a firewall (4).

4. Method according to any of Claims 1-3, **characterized in that** the data transfer tunnel between the automation system (1) and web server (9) is created before logging on of the web client (2) either by a previously specified program periodically for a certain duration or manually or by means of a separate request to the automation system (1).

5. Arrangement for carrying out the method according to any of Claims 1 to 3, comprising an automation system (1) which is embedded in a first Intranet protected by a firewall (11), a web client (2) which serves for operating, observing, controlling and remotely maintaining the automation system (1) and is embedded in a second Intranet independent of the first Intranet, and a web server (9) mediating the connection between the automation system (1) and the web client (2), and means for establishing a transmission channel from the web client (2) to the web server (9), **characterized in that** the web server (9) is present outside the first Intranet in which the automation system (1) is embedded and **in that** means for establishing a transmission channel from the automation system (1) to the web server (9) in the form of a data transfer tunnel for the transmission of data under the HTTP protocol are present.

6. Arrangement according to Claim 5, **characterized in that** the second Intranet in which the web client (2) is embedded is protected by a firewall (4).

7. Arrangement according to Claim 5, **characterized in that** the web server (9) is present in the World Wide Web.

8. Arrangement according to Claim 5, **characterized in that** the web server (9) is present in the second Intranet of the web client (2).

9. Arrangement according to Claim 7, **characterized by** cascading of a plurality of web servers (9).

## Revendications

1. Procédé pour la transmission de données pour l'utilisation et l'observation d'un système d'automatisation intégré dans un premier intranet, protégé par un pare-feu (11) entre ce système d'automatisation (1) et un client Web (2) qui est intégré dans un deuxième intranet, indépendant du premier intranet, où le client Web (2) envoie une première demande de liaison à un serveur Web (9) pour l'établissement d'un premier canal de transmission, **caractérisé en ce que** l'on accède au serveur Web (9) au moyen d'un ordre http sous forme d'une deuxième demande de liaison à partir du système d'automatisation (1) à utiliser resp. à observer pour l'établissement d'un deuxième canal de transmission, **en ce que** ce serveur Web (9) se situe en dehors du premier intranet, dans lequel est intégré le système d'automatisation, **en ce que** le deuxième canal de transmission, qui est établi par la deuxième demande de liaison, forme un tunnel de transfert de données entre le système d'automatisation (1) et le serveur Web (9), **en ce qu'**au moins un premier canal de transmission est établi entre le client Web (2) et le serveur Web (9) lors de la première demande de liaison du client Web (2), de telle manière qu'une liaison est établie entre le client Web (2) et le système d'automatisation (1) pour l'envoi et la réception bidirectionnels de données utiles sous protocole http.

2. Procédé selon la revendication 1, **caractérisé en ce que** le serveur Web (9) se situe dans le Worldwide Web.

3. Procédé selon la revendication 1, **caractérisé en ce que** le deuxième intranet, dans lequel le client Web (2) est intégré, est protégé par un pare-feu (4).

4. Procédé selon l'une quelconque de revendications 1 à 3, **caractérisé en ce que** le tunnel de transfert de données entre le système d'automatisation (1) et le serveur Web (9) est établi avant l'enregistrement du client Web (2) soit par un programme prédéterminé, périodiquement pour une certaine durée de temps ou manuellement ou au moyen d'un ordre séparé au système d'automatisation (1).

5. Configuration pour la réalisation du procédé selon l'une quelconque des revendications 1 à 3, avec un système d'automatisation (1), qui est intégré dans un premier intranet protégé par un pare-feu (11), un client Web (2) qui sert à utiliser, observer, commander et entretenir à distance le système d'automatisation (1), qui est intégré dans un deuxième intranet, indépendant du premier intranet, et un serveur Web (9) commutant la liaison entre le système d'automatisation (1) et le client Web (2) et des moyens pour l'établissement d'un canal de transmission du client Web (2) vers le serveur Web (9), **caractérisée en ce que** le serveur Web (9) se situe en dehors du premier intranet, dans lequel le système d'automatisation (1) est intégré et **en ce que** des moyens pour l'établissement d'un canal de transmission entre le système d'automatisation (1) et le serveur Web (9) sont présents sous forme d'un tunnel de transfert de données pour la transmission de données sous protocole http.

6. Configuration selon la revendication 5, **caractérisée en ce que** le deuxième intranet, dans lequel le client Web (2) est intégré, est protégé par un pare-feu (4).

7. Configuration selon la revendication 5, **caractérisée en ce que** le serveur Web (9) se situe dans le Worldwide Web.

8. Configuration selon la revendication 5, **caractérisée en ce que** le serveur Web (9) se situe dans le deuxième intranet du client Web (2).

9. Configuration selon la revendication 7, **caractérisée en** un cascadage de plusieurs serveurs Web (9).
